# EUROPEAN PATENT APPLICATION

(11) **EP 1 862 695 A1**
(43) Date of publication of application: **05.12.2007**
(21) Application number: 06713994.9
(22) Date of filing: 17.02.2006
(51) Int. Cl.: F16F 15/10, F01L 1/04, F16C 3/035, F16C 19/06, F16H 53/02

(54) **SHAFT DEVICE**

(30) Priority: 17.02.2005 JP 2005040760
(71) Applicant: JTEKT Corporation, Osaka-shi Osaka 542-8502 (JP)
(72) Inventor: UENO, Hiroshi JTEKT Corporation, Osaka 542-8502 (JP); YAMAKAWA, Kazuyoshi JTEKT Corporation, Osaka 542-8502 (JP)
(74) Representative: Sajda, Wolf E.
(86) International application number: PCT/JP2006/302853
(87) International publication number: WO 2006/088144

(57) **Abstract**

A shaft assembly includes: a shaft (1); and a rolling bearing (3) for rotatably supporting the shaft (1). The shaft (1) has a hollow configuration and is provided with a different nature member (25), formed from a material different from that forming the shaft (1), in a hollow portion (24) thereof. Thus, the shaft assembly accomplishes torque reduction by reducing the frictional resistance of the bearing (3) and is adapted to reduce vibrations and noises associated with the use of the rolling bearing (3).

## Description

### TECHNICAL FIELD

The present invention relates to a shaft assembly supporting a shaft by means of a bearing.

### BACKGROUND ART

A sliding bearing and a rolling bearing are known as a bearing serving to rotatably support a linear shaft. The sliding bearing has an inner periphery in sliding contact with an outer periphery of the shaft via an oil film. The sliding bearing has a greater frictional resistance between the bearing and the shaft as compared with the rolling bearing.
As to an assembly wherein it is desired to reduce the friction loss of the rotating shaft by reducing the frictional resistance between the bearing and the shaft, a constitution has been proposed wherein the conventionally used sliding bearing is replaced by the rolling bearing.
A cam shaft assembly wherein all the bearings supporting the shaft are constituted by the sliding bearings is disclosed in, for example, Japanese Unexamined Patent Publication No.8-218 817. A cam shaft assembly wherein the bearings supporting such a cam shaft are constituted by the rolling bearings is disclosed in Japanese Unexamined Utility Model Publication No.5-006 104, for example.

In a case where the rolling bearing is employed in order to reduce the frictional resistance between the rotating shaft and a supporting member in sliding contact with this shaft, rolling elements roll on raceway surfaces so that vibrations and noises are increased as compared with a case where the sliding bearing is employed.
In view of the foregoing problem, it is an object of the present invention to provide a shaft assembly designed to reduce vibrations and noises associated with the use of the rolling bearing.

### DISCLOSURE OF THE INVENTION

According to the present invention for achieving the above object, a shaft assembly comprising a shaft and a rolling bearing for rotatably supporting the shaft is characterized in that the shaft has a hollow configuration and is provided with a different nature member in a hollow portion thereof, the different nature member being formed from a material different from that forming the shaft.
According to the constitution, the different nature member is disposed in the hollow portion of the shaft so that the shaft in combination with the different nature member are adapted for quick convergence and attenuation of the vibrations caused by the rolling element of the rolling bearing rolling on the raceway surfaces thereof. Thus, the vibrations and the resulting noises may be reduced.
Since the shaft is supported by the rolling bearing, the frictional resistance of the bearing is reduced so that the shaft assembly may be reduced in the friction loss during rotation. Particularly, the shaft assembly may be reduced in the friction loss at the start of rotation and during low speed rotation.

The different nature member is disposed in the hollow portion of the shaft at place corresponding to a shaft portion where the rolling bearing is mounted. The constitution provides an even greater effect to reduce the vibrations and noises by virtue of the different nature member disposed in the shaft at place just below (directly inwardly from) the rolling bearing.

It is also preferred that an inner-ring raceway groove for the rolling bearing is formed on an outer periphery of the shaft. This constitution permits the shaft to serve as the inner ring of the rolling bearing so that the shaft assembly may include a reduced number of components and is increased in load carrying capacity.

The rolling bearing may preferably be a deep groove ball bearing. This is advantageous in that if the shaft is deflected to produce an angle of deflection of a bearing portion, followability is provided between the balls as the rolling element of the rolling bearing and the raceway surfaces defined by curved surfaces. Furthermore, the rolling bearing is capable of accommodating an axial load exerted on the shaft. That is, the constitution is adapted to restrict the axial displacement or movement of the shaft without using an additional member for receiving the axial load.

The shaft assembly is characterized in that a cam separate from the shaft is mounted to the shaft as fitted thereon and that the rolling bearing includes a bearing ring comprising one annular piece and is mounted to the shaft as fitted thereon. Since the cam is formed separately from the shaft, it is possible to mount the rolling bearing to the shaft, followed by mounting the cam. In order to mount the rolling bearing and the cam, the shaft is inserted through the rolling bearing and the cam so that the rolling bearing and the cam may be moved from the end of the shaft to respective predetermined positions.
It is therefore possible to interpose, for example, a rolling bearing between a pair of cams, the rolling bearing including a bearing ring constituted by one annular piece having a smaller inside diameter than the maximum outside diameter of the cam.
In addition, the rolling bearing is free from a seam on its raceway surface. If the bearing ring has a split structure so that the seam is formed on the raceway surface, the vibrations and noises are produced by the rolling elements moving over the seam so that a shortened service life of the bearing results.

### BRIEF DESCRIPTION OF THE DRAWINGS

- FIG. 1: is a side view partly in section for showing a shaft assembly according to one embodiment of the present invention;
- FIG. 2: is a sectional view showing an essential part of FIG. 1;
- FIG. 3: is a sectional view of a rolling bearing provided in the shaft assembly; and
- FIG. 4: is a sectional view showing a conventional shaft assembly.

### BEST MODE FOR CARRYING OUT THE INVENTION

A shaft assembly permitting the rotation of a linear shaft includes one which includes a shaft and a rolling bearing for rotatably supporting the shaft. The rolling bearing is mounted to the shaft at a predetermined axial position, as fitted on the shaft. The rolling bearing has an outer periphery of an outer ring thereof fixed to a fixing member of a housing, for example, which constitutes a chamber accommodating the shaft.

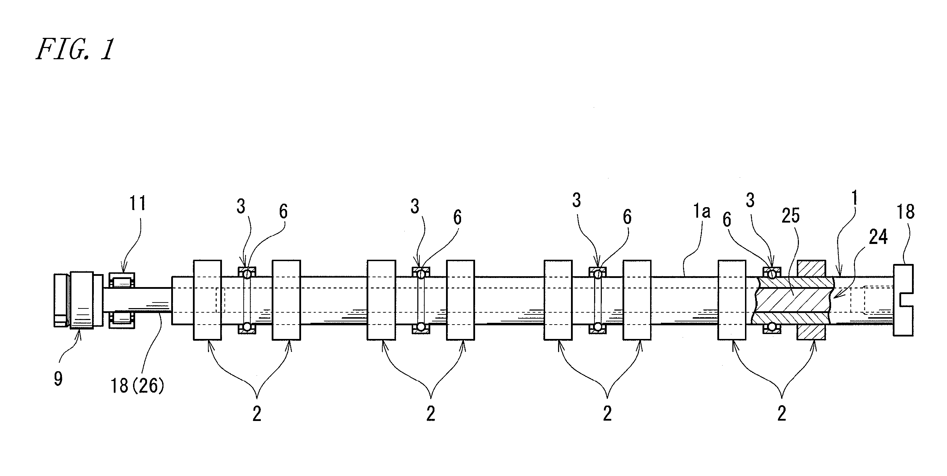

A specific example of the assembly employing such a shaft assembly includes a cam shaft assembly for operating intake/exhaust valves of an automotive engine. The invention will hereinafter be described by way of example of a cam shaft assembly permitting the rotation of a shaft 1 including cams 2, as illustrated in FIG. 1.

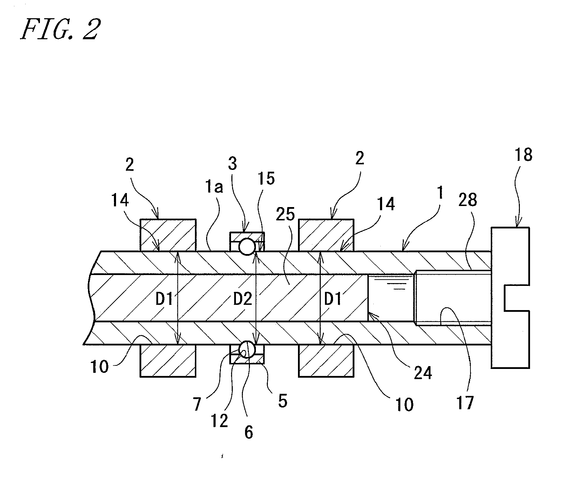

FIG. 2 is a sectional view showing an essential part of FIG. 1. The cam shaft assembly includes: a linear shaft 1; a plurality of oval cams 2 separate from the shaft 1 and fitted on the shaft 1; and a plurality of rolling bearings 3 rotatably supporting the shaft 1. The cams 2 and the rolling bearings 3 are disposed at predetermined axial positions of the shaft 1, respectively. One rolling bearing 3 is interposed between each pair of cams 2.

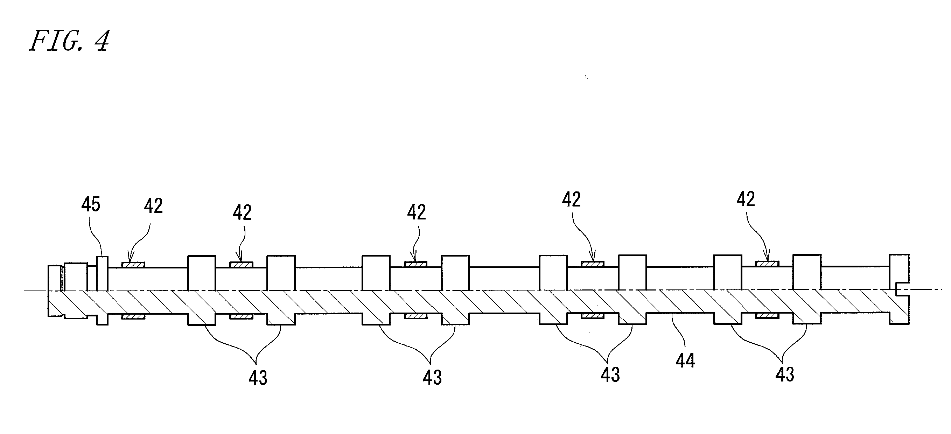

Unlike a cam shaft of a conventional example which is cast in one piece including a shaft body 44 and cam portions 43 as shown in FIG. 4, the shaft 1 of the assembly is formed in an assemblable structure such that the shaft 1 and the cams 2 are formed discretely and then, the cams are assembled to the shaft, as shown in FIG. 1 and FIG. 2. The shaft 1 is a linear member, while the cam 2 is formed with a through-hole 10 so as to be fitted on the shaft 1. This permits the cam 2, fitted on the shaft 1 via an end thereof, to be axially moved along the shaft 1 from the end thereof and to be mounted to a predetermined axial position (cam mounting portion 14) of the shaft 1.

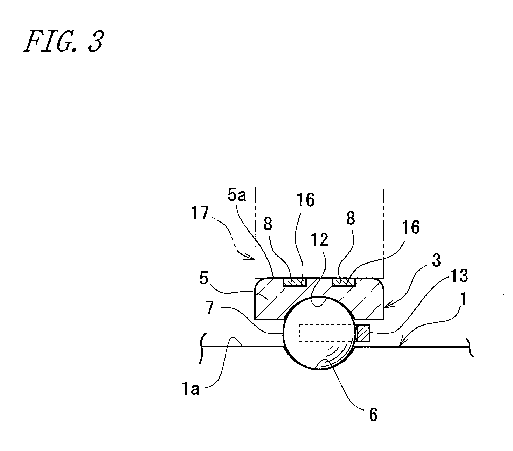

On the other hand, the rolling bearing 3 rotatably supports the shaft 1 as fittingly mounted on the shaft 1. The rolling bearing is constituted by a deep groove ball bearing. As shown in FIG. 2 and FIG. 3, the rolling bearing 3 has an inner-ring raceway groove 6 formed on an outer periphery 1a of the shaft 1, and has an outer ring 5 disposed radially outwardly of the shaft 1. The rolling bearing has rolling elements consisting of a plurality of balls 7 interposed between the raceway groove 6 formed on the shaft 1 and a raceway groove 12 formed on the outer ring 5. These balls 7 are retained by a cage 13.

The bearing ring of the rolling bearing 3 is not formed in a split structure but is constituted by one annular piece (one-piece structure). Namely, the outer ring 5 does not have the split structure but constitutes one annular piece. Thus, the outer ring is free from a seam on its raceway surface.
Since the cam 2 is formed separately from the shaft 1, such a rolling bearing 3 may be mounted to the shaft 1 at an intermediate portion thereof, such as a place between a pair of cams 2. Specifically, the following procedure may be taken in a case where the rolling bearing 3 is mounted to place between a pair of cams 2. The first cam 2 is fitted on the shaft 1 via the end thereof so as to be mounted to a predetermined cam mounting portion 14.
Before the second cam 2 is fitted on the shaft 1 so as to be mounted thereto, the shaft 1 is inserted through the rolling bearing 3 so that the rolling bearing 3 may be axially moved along the shaft 1 from the end thereof and mounted to a predetermined axial position (rolling-bearing mounting portion 15). Subsequently, the second cam 2 may be fitted on the shaft 1 via the end thereof and mounted thereto.

The shaft 1 is a cylindrical member having a circular cross section and has a hollow configuration. A different nature member 25 is provided in a hollow portion 24 of the shaft 1. The different nature member 25 is formed from a material different from a material forming the shaft 1. That is, the different nature member 25 includes the different material from that of the shaft 1 and has a different specific gravity from that of the shaft 1.
Specific examples of the material forming the different nature member 25 include: metals such as brass, bronze, mild steel and aluminum alloy; resins; rubbers; and ceramics. In this case, a bar-like member may be formed from any of these materials and inserted into the hollow portion 24 of the shaft 1. The different nature member 25 consisting of the bar-like member is fitted in the shaft 1 in such a manner that an outer periphery of the different nature member 25 is in tight contact with an inner periphery of the shaft 1. Namely, the different nature member 25 constitutes a core member of the hollow shaft 1. This provides for quick convergence and attenuation of the vibrations occurring in the rolling bearing 3 so that the vibrations and the resultant noises may be reduced.

In place of such a bar-like member including a solid mass, the different nature member 25 may also employ a liquid such as an oil, or a semisolid material such as a gel for absorbing the vibrations. In this case, the different nature member 25 may be filled in the cylindrical shaft 1 and an end of the shaft 1 may be sealed with a stopper member 18.
While the stopper member 18 is provided in the case where such a different nature member 25 including the liquid or semisolid material is employed, the stopper member 18 may also be provided for closing the end of the shaft 1 even in the case where the different nature member 25 consisting of the aforesaid bar-like member is employed.

The stopper member 18 shown in FIG. 2 includes a male thread 28 threadedly engaging with a screw hole 27 formed in the end of the shaft 1. At the other end of the shaft, the stopper member 18 is constituted by a shaft member 26 having a smaller diameter than that of the shaft 1, as shown in FIG. 1. The shaft member 26 is inserted in an end of the hollow portion 24 thereby to close the other end of the shaft 1. These stopper members 18 (shaft member 26) may also be fixed to places by any other means than the screw system and the press-insertion method.
The shaft member 26 is fixed to place in coaxial relation with the shaft 1. Mounted to the shaft member 26 are a pulley 9 for rotating the shaft 1, and a cylindrical roller bearing 11 for supporting a shaft portion near the pulley 9. Although a great radial belt-load is exerted on the pulley 9, the cylindrical roller bearing 11 having a great load carrying capacity is used so as to support the shaft member 26 and the shaft 1 in a stable manner.

Description is made on an axial position of the different nature member 25 with respect to the shaft 1. It is preferred that the different nature member 25 is provided in the hollow portion 24 of the shaft 1 at least in correspondence to the shaft portion where the rolling bearing 3 is mounted. Specifically, the different nature member 25 is disposed in the hollow portion 24 defining a thin elongated column shape in a manner that the different nature member 25 is located at place directly inwardly from (just below) a portion of the outer periphery 1a of the shaft 1, the portion formed with the inner-ring raceway groove 6 for the rolling bearing 3. This provides for an effective reduction of the vibrations and noises.
More specifically, the different nature member 25 consisting of a single bar-like member is inserted in the shaft 1 as extended therethrough for the substantially overall length of the shaft 1 except for the opposite ends thereof. In other words, the different nature member 25 continuously extends from the one end to the other end of the shaft 1 in the axial direction thereof. In an alternative constitution not shown, the different nature member 25 may also be disposed in the hollow portion 24 only at places corresponding to the shaft portions mounted with the rolling bearings 3. That is, the different nature member 25 may be provided at space intervals in the axial direction of the shaft 1.

Since the outer periphery 1a of the shaft 1 is formed with the inner-ring raceway grooves 6 for the rolling bearings 3, the shaft 1 may be formed from a conventionally known bearing steel or any other material used for forming the bearing ring.
If the different nature member 25 includes a material having a smaller specific gravity than that of the shaft 1, the shaft 1 is not only decreased in weight but is also increased in inertia moment about its axis. Hence, the shaft 1 is adapted for stable rotation.

Description is made on the cam 2 mounted to the shaft 1. Although the cam 2 may be constituted to rotate unitarily with the shaft 1 by using a non-illustrated key member or the like, it is preferred that the cam 2 is fixed to the shaft 1 as fitted thereon with interference between the through-hole 10 of the cam 2 and the shaft. Hence, the cam 2 may be shrinkage-fitted on the shaft 1, for example. This provides for a simple and rigid mounting of the cam 2. This constitution does not require an additional fixing member, so that the number of components may be reduced.

The shaft 1 is described more specifically. The shaft 1 is formed in a linear structure which permits the cams 2 and the rolling bearings 3 to be axially moved from the end of the shaft so as to be mounted to respective predetermined positions. In order to permit the cams 2 and the rolling bearings 3 to be axially moved from the end of the shaft to the respective predetermined positions, the shaft 1 is so configured as to have the same outside diameter at the cam mounting portions 14 and at the bearing mounting portion 15, and also to define a circular sections of the maximum outside diameter at these portions.
Specifically, as shown in FIG. 2, an outside diameter D1 of all the cam mounting portions 14 is of an equal value to that of an outside diameter D2 of all the rolling-bearing mounting portions 15. The rolling-bearing mounting portion 15 is formed with the raceway groove 6 and hence, the outside diameter D2 of the rolling-bearing mounting portion 15 is defined to be a diameter determined at a shoulder portion.
This allows for the centerless machining (centerless polishing) of the cam mounting portions 14 and rolling-bearing mounting portions 15 of the shaft 1. Hence, the cam shaft 1 may be easily manufactured at low cost and with high precisions.

The shaft 1 may have the straight linear structure having the constant diameter across the overall length thereof, defining a uniform circular section with respect to the axial direction (namely, the outer periphery 1a of the shaft is free from step across the overall length thereof). Alternatively, the shaft may also have a small-stepped linear structure wherein all the cam mounting portions 14 and rolling-bearing mounting portions 15, having the same outside diameter, define the maximum diameter while the other shaft portions define a slightly smaller diameter.

As shown in FIG. 3, an elastic ring member 8 is mounted on an outer periphery 5a of the outer ring 5 of the rolling bearing 3. This ring member 8 is fixed in a circumferential groove 16 formed in the outer periphery 5a of the outer ring 5. The ring member 8 may be formed from a resin or rubber material, for example. This ring member 8 is capable of reducing the vibrations and noises of the rolling bearing 3 supporting the shaft 1.
In addition, the ring member 8 is also capable of reducing a gap or stress between a bearing mounting portion 17 of an engine housing provided with this assembly and the rolling bearing 3, the gap or stress caused by a difference of radial expansion between the bearing mounting portion 17 of the housing and the rolling bearing 3 when a temperature difference occurs in the housing. While the ring member 8 is provided in two lines juxtaposing to each other in the axial direction, the ring member may be provided in one line or three or more lines.

According to the embodiment of the invention as described above, the different nature member 25 is provided in the hollow portion 24 of the shaft 1, so that the vibrations caused by the balls 7 of the rolling bearing 3 rolling on the raceway grooves 6, 12 thereof may be quickly converged and attenuated in the shaft 1. Thus, the shaft assembly for cam 2 used in the engine is adapted to reduce the annoying vibrations and noises.
All the bearings supporting the shaft 1 are the rolling bearings 3 (the deep groove ball bearings and the cylindrical roller bearing 11) and hence, the shaft assembly may be particularly reduced in the frictional resistance at the start of rotation and during low speed rotation. Thus, the shaft assembly as a whole may achieve a dramatic reduction of the friction loss during rotation. Hence, the shaft assembly may be used in an automotive engine so as to contribute to an improved fuel economy of the engine.

In addition, all the cams 2 are formed separately from the shaft 1 and hence, it is possible to mount the rolling bearing 3 to the shaft 1, followed by mounting the cam 2. When the rolling bearing is mounted, the shaft 1 is inserted through the outer ring 5 so that the outer ring 5, constituted by one annular piece, may be moved from the end of the shaft 1 to the predetermined position and mounted thereto. That is, the outer ring 5 of the rolling bearing 3 need not have the split structure so that the outer-ring raceway groove 12 is free from the seam.

In the conventional assembly, the shaft requires a non-illustrated rolling-bearing mounting flange having a greater diameter than that of the cam in order that the rolling bearing including the outer ring constituted by one annular piece is mounted to the shaft by moving the rolling bearing from the end of the shaft integrally formed with the cams as shown in FIG. 4.
This results in a problem that a radial dimension with respect to the center of the shaft is increased. However, the invention negates the need for such a flange having the great diameter. Therefore, the engine housing accommodating the shaft 1 may be reduced in the radial dimension with respect to the center of the shaft 1.

The following working effect is offered by using the deep groove ball bearings as the rolling bearings 3 disposed in vicinity of the cams 2 for supporting the shaft 1. The shaft 1 is provided with the plurality of cams 2. A load is exerted on these cams 2 when the cams operate the intake/exhaust valves of the engine, thus causing periodic pulsations (oscillations) of the shaft 1. However, the deep groove ball bearing is capable of relieving the displacement of the pulsated shaft 1 by way of the raceway surfaces defined by curved surfaces and the balls 7 in contact with the raceway surfaces.
What is more, the rolling bearing 3 is capable of receiving an axial load exerted on the shaft 1, thus restricting an axial displacement of the shaft 1. In the conventional assembly based on the sliding bearing as shown in FIG. 4, the shaft is provided with a flange 45 for restricting the axial movement thereof. The flange 45 is clamped by an inner rib (not shown) formed in the engine housing whereby the axial displacement of the shaft is restricted.
However, the invention negates the need for the flange 45. The flange 45 of the conventional assembly and the inner rib of the housing are in sliding contact to produce friction, which causes the friction loss of the assembly in rotation. However, such a friction loss may be eliminated by employing the ball bearing.

The shaft assembly of the invention is not limited to the illustrated embodiments and may be practiced in any other modes within the scope of the invention. While the embodiments shown in FIG. 1 and FIG.3 use eight cams 2 and four rolling bearings 3, the locations and quantities of these components are not limited to these but are optional.
The shaft assembly shown in FIG. 1 and FIG. 2 accomplishes the reduction of the number of components and the increase of the load carrying capacity by using the shaft 1 as the inner ring. Alternatively, the rolling bearing 3, the illustration of which is omitted, may include the inner ring separate from the shaft 1. In this case, the inner ring is constituted by one annular piece and is mounted to the shaft 1 as fitted thereon.

## Claims

1. A shaft assembly comprising: a shaft having a hollow configuration and provided with a different nature member in a hollow portion thereof, the different nature member being formed from a material different from that forming the shaft; and a rolling bearing for rotatably supporting the shaft.

2. A shaft assembly according to Claim 1,
wherein the different nature member is disposed in the hollow portion of the shaft at place corresponding to a shaft portion where the rolling bearing is mounted.

3. A shaft assembly according to Clam 1 or 2,
wherein an inner-ring raceway groove for the rolling bearing is formed on an outer periphery of the shaft.

4. A shaft assembly according to any one of Claims 1 to 3,
wherein the rolling bearing is a deep groove ball bearing.

5. A shaft assembly according to any one of Claims 1 to 4,
wherein a cam separate from the shaft is mounted to the shaft as fitted thereon and wherein the rolling bearing includes a bearing ring comprising one annular piece and is mounted to the shaft as fitted thereon.
